# EUROPÄISCHE PATENTSCHRIFT

(11) **EP 0 881 997 B1**
(45) Veröffentlichungstag und Bekanntmachung des Hinweises auf die Patenterteilung: **20.10.1999**
(21) Anmeldenummer: 97905037.4
(22) Anmeldetag: 17.02.1997
(51) Int. Cl.: C04B 14/20

(54) **VERFAHREN ZUR HERSTELLUNG EINES NICHT BRENNBAREN FORMTEILS, INSBESONDERE BAUSTOFFPLATTE**
PROCESS FOR PRODUCING A NON-COMBUSTIBLE MOULDED ARTICLE, ESPECIALLY A BUILDING PANEL
PROCEDE DE FABRICATION D'UNE PIECE FA ONNEE NON COMBUSTIBLE, EN PARTICULIER D'UN PANNEAU EN UN MATERIAU DE CONSTRUCTION

(30) Priorität: 23.02.1996 EP 96890026
(43) Veröffentlichungstag der Anmeldung: 09.12.1998
(73) Patentinhaber: THERMAX-Brandschutzbauteile Gesellschaft m.b.H., 3300 Greinsfurth (AT)
(72) Erfinder: TOMANDL, Erwin, A-3354 Wolfsbach (AT)
(74) Vertreter: Dungler, Karin
(86) Internationale Anmeldenummer: EP9700746
(87) Internationale Veröffentlichungsnummer: WO9730951

(56) Entgegenhaltungen:
- EP-A- 0 043 144
- EP-A- 0 429 330
- AU-A- 7 256 974
- CH-A- 584 597
- DE-A- 2 503 920
- DE-A- 2 831 851
- FR-A- 2 384 601
- GB-A- 647 810
- US-A- 4 093 488
- DATABASE WPI Week 7902 Derwent Publications Ltd., London, GB; AN 79-02626B XP002008087 & JP 53 134 814 A (OKURA INDUSTRIAL KK) , 24.November 1978

## Beschreibung

Die Erfindung betrifft ein Verfahren zur Herstellung von nicht brennbaren Formteilen, insbesondere Baustoffplatten, bei dem man Vermiculitgranulat bei erhöhter Temperatur bläht, das geblähte Vermiculitgranulat mit einer Lösung eines anorganischen Bindemittels beleimt, das beleimte Vermiculitgranulat kontinuierlich oder diskontinuierlich vorverpreßt, auf die jeweilige Form des Teiles zuschneidet und diese Zuschnitte diskontinuierlich mindestens bei Raumtemperatur, vorzugsweise bei Temperaturen von mindestens 100°C und Drücken von mindestens 0.3 N/mm² verpreßt, sodaß sämtliche Lösungsmittelreste aus dem endgefertigten, nicht brennbaren Formteil entfernt werden.

Es ist bekannt, bei der Herstellung von nicht brennbaren Formteilen geblähte Materialien wie Vermiculit, Perlit oder Blähton mit Bindemitteln bestehend aus anorganischen und/oder organischen Komponenten zu beleimen und anschließend zu verpressen, sodaß eine Verbindung der geblähten Materialteilchen untereinander entsteht.

So wird beispielsweise gemäß der US-A-4093488 ein zweistufiges Verfahren mit Vor- und Heißpreßschritt zur Herstellung von nicht brennbaren Bauplatten angeführt, wobei expandierter Vermiculit mit einer wäßrigen Kunstharzmischung aus Phenolformaldehyd- und Harnstoffharzen beleimt wird. Dabei hat es sich gezeigt, daß insbesondere aus den Phenolformaldehydkondensationsharzen, bedingt durch die Verfahrensparameter während des preßvorgangs, niedrig molekulare Verbindungen, nämlich Formaldehyd, freigesetzt werden. Dadurch haben sich diese bekannten Verfahren als relativ umweltbelastend erwiesen.

Gemäß der DE-A-2831851 und der EP-A-43144 wird daher vorgeschlagen, einen Teil der Gesamtbindemittelmenge durch anorganische Bindemittel zu ersetzen. Da als organisches Bindemittel weiterhin Phenolformaldehydharz eingesetzt wird, werden weiterhin erhebliche Anteile von Formaldehyd beim Verpressen freigesetzt.

Aus der DE-A-2503920 ist es nun vorbekannt, ausschließlich anorganische Bindemittel einzusetzen, wobei insbesondere Kieselfluorwasserstoffsäure Verwendung findet. Da jedoch die Salze der Kieselfluorwasserstoffsäure in Wasser schwer lösbar sind, ist dieses Verfahren, insbesondere die Beleimung der Vermiculitteilchen, relativ aufwendig.

Das DE-U-1 946 275 offenbart ferner eine nicht brennbare Bauplatte, bei der expandierter Vermiculit mit einem anorganischen Bindemittel aus Monoaluminiumphosphat beleimt wird. In der Praxis hat es sich gezeigt, daß das Bindemittel vorwiegend an den Verbindungsflächen der Teilchen, nicht aber im gesamten Plattenquerschnitt wirksam wird. Zusätzlich verbleiben zwischen den Teilchen relativ große Zwischenräume, in welchen Wasser adsorbiert werden kann, wodurch die schlechte Wasserbeständigkeit und somit die geringe mechanische Stabilität dieser Bauplatten erklärbar sind.

Hier will die Erfindung Abhilfe schaffen.

Aufgabe der Erfindung ist es daher, ein leicht durchführbares Verfahren zur Herstellung nicht brennbarer Formteile anzugeben, welches gleichzeitig umweltfreundlich ist und auch zufriedenstellende Eigenschaften am Verfahrensendprodukt wie dessen mechanische Stabilität und Unbrennbarkeit bewirkt.

Erfindungsgemäß wird daher ein Verfahren der eingangs genannten Art vorgeschlagen, welches dadurch gekennzeichnet ist, daß als anorganisches Bindemittel ausschließlich ein phosphorhältiges Bindemittel eingesetzt wird.

Ein Vorteil des erfindungsgemäßen Verfahrens besteht darin, daß die diskontinuierliche Heißverpressung in einer Presse erfolgt, welche mit den üblichen Heizmedien und zusätzlich mittels Hochfrequenzstrom beheizt wird. Ferner erfolgt die diskontinuierliche Heißverpressung vorteilhafterweise in Gegenwart eines Dampfsiebes zur Entfernung von Lösungsmittelresten. Ebenso können vorteilhafterweise bei der kontinuierlichen Vorverpressung ein- oder beidseitig an den Schüttkuchen angeordnete Deckblätter mitverpreßt werden.

Im erfindungsgemäßen Verfahren eignen sich als phosphorhältige Bindemittel besonders gut jene auf Basis von phosphorhältigen Säuren und/oder deren Salze.

Die Erfindung wird nunmehr anhand eines Ausführungsbeispiels näher erläutert:

In einem Drehrohrofen wird das Vermiculitgranulat bei einer Temperatur von ca. 850° C gebläht. Das geblähte Vermiculitgranulat gelangt anschließend in eine Mischanlage, in der es mit der über eine Dosiereinrichtung zugegebenen Bindemittellösung vermischt wird. Die Bindemittellösung besteht beispielsweise aus wässeriger Ortho-Phosphorsäure, welche zusätzlich Hydrophobierungsmittel auf Basis von Organosiliciumverbindungen enthält. Die Dosierung wird derart gesteuert, daß die Bindemittelmenge in der endgefertigten Platte etwa 10 Gew.% beträgt.

Das aus der Mischeinrichtung entnommene, mit dem Bindemittel beleimte Gemisch wird nun in einen Streubunker bzw. einer Streustation übergeführt, in der eine Schüttung gleichmäßiger Höhe gebildet wird. Diese Schüttung wird anschließend in eine Vorpreßeinrichtung transportiert, in welcher sie auf ca. 50% der Schütthöhe vorkomprimiert wird. An den Schüttkuchen können beidseitig Deckblätter beispielsweise Dekorblätter aufgebracht werden. Nach dem Vorverpressen wird der Vorpressling zu großen Platten geschnitten und diskontinuierlich in eine mit HF-Strom und Thermoöl beheizbare Presse übergeführt, in welcher die Platten bei einer Temperatur von 200°C und einem Preßdruck von 1 N/mm2 verpreßt werden. Durch die erhöhte Temperatur erfolgt eine Vernetzung der Phosphorsäure unter Wasserabspaltung. Dieses Reaktionswasser sowie eventuell anfallende Lösungsmittelreste können mit einem in der Presse angebrachten Dampfsieb entfernt werden. Durch diese Maßnahme können Unregelmäßigkeiten in der Plattenoberfläche vermieden werden. Die fertig gepreßte Platte wird nun vom Preßblech getrennt und gekühlt. Anschließend werden die Platten auf das gewünschte Format geschnitten und abgestapelt.

Die erfindungsgemäß hergestellten, nicht brennbaren Formteile können beispielsweise im Maschinenbau und in der Bauindustrie eingesetzt werden.

## Patentansprüche

1. Verfahren zur Herstellung eines nicht brennbaren Formteiles, insbesondere einer Baustoffplatte, bei dem man Vermiculitgranulat bei erhöhter Temperatur bläht, das geblähte Vermiculitgranulat mit einer Lösung eines anorganischen Bindemittels beleimt, das beleimte Vermiculitgranulat kontinuierlich oder diskontinuierlich vorverpreßt, auf die jeweilige Form des Teiles zuschneidet und diese Zuschnitte diskontinuierlich mindestens bei Raumtemperatur, vorzugsweise bei Temperaturen von mindestens 100°C und Drücken von mindestens 0.3 N/mm² verpreßt, sodaß sämtliche Lösungsmittelreste aus dem endgefertigten, nicht brennbaren Formteil entfernt werden, dadurch gekennzeichnet, daß als alleiniges Bindemittel ein phosphorhältiges Bindemittel eingesetzt wird, welchem als Zusatzstoff ein Hydrophobierungsmittel auf Basis einer Organosiliciumverbindung beigemengt wird.

2. Verfahren nach Anspruch 1, dadurch gekennzeichnet, daß die diskontinuierliche Heißverpressung in einer Presse erfolgt, welche mit den üblichen Heizmedien und zusätzlich mittels Hochfrequenzstrom beheizt wird.

3. Verfahren nach Anspruch 1 oder 2, dadurch gekennzeichnet, daß die diskontinuierliche Heißverpressung in Gegenwart eines Dampfsiebes zur Entfernung von Lösungsmittelresten erfolgt.

4. Verfahren nach einem der Ansprüche 1 bis 3, dadurch gekennzeichnet, daß bei der kontinuierlichen Vorverpressung ein- oder beidseitig an den Schüttkuchen angeordnete Deckblätter mitverpreßt werden.

5. Verfahren nach Anspruch 4, dadurch gekennzeichnet, daß das anorganische, phosphorhältige Bindemittel eines auf Basis von phosphorhältigen Säuren und/oder deren Salze ist.

## Claims

1. A method of producing a non-combustible moulding, in particular a building material board, in which granular vermiculite is expanded at high temperature, the expanded granular vermiculite is sized with a solution of an inorganic binder, the sized granular vermiculite is continuously or discontinuously prepressed, is cut to the particular shape of the part and these blanks are pressed discontinuously at least at room temperature, preferably at temperatures of at least 100°C and at pressures of at least 0.3 N/mm², so that all solvent residues are removed from the finished non-combustible moulding, characterised in that a phosphorus-containing binder is used as the sole binder, with which a water repellent based on an organosilicon compound is admixed as an additive.

2. A method according to Claim 1, characterised in that the discontinuous hot pressing is carried out in a press which is heated with conventional heating media and additionally by means of high-frequency current.

3. A method according to Claim 1 or 2, characterised in that the discontinuous hot pressing is carried out in the presence of a vapour sieve for removing solvent residues.

4. A method according to any one of Claims 1 to 3, characterised in that during the continuous prepressing cover sheets arranged on one or both sides on the bulk cake are jointly pressed.

5. A method according to Claim 4, characterised in that the inorganic phosphorus-containing binder is a binder based on phosphorus-containing acids and/or their salts.

## Revendications

1. Procédé de fabrication de pièces façonnées non inflammables, notamment de carreaux ou plaques de matériaux de construction, dans lequel un granulat de vermiculite est expansée sous l'action d'une température élevée, le granulat de vermiculite expansé est revêtu d'une solution d'un agent inorganique, le granulat de vermiculite revêtu de cet agent adhésif subit une précompression effectuée en continu ou discontinu pour atteindre la forme recherchée des pièces façonnées, puis lesdites formes sont soumises à une compression effectuée en discontinu à une température d'au moins la température ambiante, de préférence à des températures d'au moins 100°C et sous des pressions d'au moins 0,3 N/mm², de sorte que l'ensemble des restes de la dite solution sont éliminés des pièces façonnées non inflammables, ce procédé étant caractérisé en ce que, en tant que seul et unique agent adhésif est employé un agent adhésif contenant du phosphore auquel est mélangé en tant qu'additif un agent hydrophobe à base d'un composé organo-silicium.

2. Procédé selon la revendication 1, caractérisé en ce que la compression à chaud effectuée en discontinu est effectuée dans une presse comprenant les moyens de chauffage appropriés, en même temps qu'est appliqué un courant haute fréquence.

3. Procédé selon la revendication 1 ou 2, caractérisé en ce que la compression à chaud est effectuée en discontinu en présence de moyens de filtration de la vapeur pour éliminer les restes de la solution d'adhésif.

4. Procédé selon l'une quelconque des revendications 1 à 3, caractérisé en ce que lors de la précompression effectuée en continu sont simultanément mises en compression les feuilles de revêtement appliquées sur l'une ou les deux faces du gâteau à compresser.

5. Procédé selon la revendication 4, caractérisé en ce que l'agent adhésif inorganique contenant du phosphore est en un sel formé à partir d'un acide et/ou à base d'un acide contenant du phosphore et/ou d'un sel d'un tel acide.
